# EUROPÄISCHE PATENTSCHRIFT

(11) **EP 2 313 227 B1**
(45) Veröffentlichungstag und Bekanntmachung des Hinweises auf die Patenterteilung: **11.09.2019**
(21) Anmeldenummer: 09777398.0
(22) Anmeldetag: 23.07.2009
(51) Int. Cl.: B23D 77/00, B23D 77/02

(54) **REIBAHLE**
REAMER
ALÉSOIR

(30) Priorität: 21.08.2008 DE 102008045327
(43) Veröffentlichungstag der Anmeldung: 27.04.2011
(73) Patentinhaber: MAPAL Fabrik für Präzisionswerkzeuge Dr. Kress KG, 73431 Aalen (DE)
(72) Erfinder: GAUGGEL, Heinz, 72474 Winterlingen (DE)
(74) Vertreter: Kordel, Mattias
(86) Internationale Anmeldenummer: PCT/EP2009/005357
(87) Internationale Veröffentlichungsnummer: WO 2010/020326

(56) Entgegenhaltungen:
- WO-A-2006/010576
- CH-A- 449 390
- DE-A1-102006 024 569
- DE-A1-102006 043 616
- US-A- 960 526
- US-A- 4 705 435

## Beschreibung

Die Erfindung betrifft eine Reibahle gemäß dem Oberbegriff des Anspruchs 1. Eine solche Reibahle ist aus der CH 449 390 bekannt.

Andere Reibahlen der hier angesprochenen Art sind auch bekannt (DE 10 2006 043 616 A1). Sie weisen einen Grundkörper mit einer Stirnseite und mit einer Außenfläche auf, in die Nuten eingebracht sind. Sie umfassen außerdem eine innere Kühl-/Schmiermittelversorgung mit Kanälen, welche die Außenfläche des Grundkörpers schneiden. In die Nuten sind Messerplatten eingesetzt, mit denen Späne von einer Bohrungsoberfläche abgetragen werden, indem eine Relativdrehung zwischen dem Werkzeug und einem zu bearbeitenden Werkstück erzeugt wird, in der Regel dadurch, dass die rotierende Reibahle in die Bohrung eines feststehenden Werkstücks eingeführt wird. Die entstehenden Späne werden von Spanräumen aufgenommen, die durch zwischen den Messerplatten angeordnete Vertiefungen im Grundkörper der Reibahle realisiert werden. Die Austrittsöffnungen der Kanäle liegen in einem Abstand zur Stirnseite des Grundkörpers. Während die Reibahle in eine Bohrung eingeführt wird, strömt das Kühl-/Schmiermittel aus den Austrittsöffnungen heraus, kühlt die Messerplatten sowie das bearbeitete Werkzeug und bewirkt die Austragung der bei der Bearbeitung eines Werkstücks entstehenden Späne. Es hat sich herausgestellt, dass sich besonders gute Bearbeitungsergebnisse einstellen, wenn die Reibahle mit sehr vielen Messerplatten versehen ist, die jeweils Schneidkanten aufweisen, die mit der Bohrungsoberfläche eines Werkstücks in Eingriff treten und Späne abtragen. Es hat sich gezeigt, dass der Grundkörper der Reibahle besonders bei kleinen Durchmessern durch eine große Zahl von Messerplatten und zugehörigen Spanräumen sehr geschwächt wird, sodass das Werkzeug keine ausreichende Stabilität aufweist, was zu einem Ausfall des Werkzeugs, aber auch insbesondere zu einer Reduktion der Oberflächenqualität der bearbeiteten Bohrung führt. Überdies ist eine ausreichende Kühlung und/oder Schmierung der Reibahle nicht immer gesichert.

Aufgabe der Erfindung ist es daher, eine Reibahle zu schaffen, die so ausgestaltet ist, dass diese Nachteile vermieden werden.

Zur Lösung dieser Aufgabe wird eine Reibahle vorgeschlagen, welche die in Anspruch 1 genannten Merkmale aufweist. In ihrer Außenfläche sind Messerplatten mit geometrisch definierten Schneiden eingesetzt, die der Bearbeitung eines Werkstücks dienen. Zwischen in Umfangsrichtung je zwei benachbarten Messerplatten wird ein Strömungskanal gebildet, der von den einander zugewandten Seitenflächen der Messerplatten seitlich begrenzt wird. Auch die Außenfläche des Grundkörpers der Reibahle dient der Begrenzung dieses Strömungskanals. Wird die Reibahle in eine Bohrung eines Werkstücks eingefahren, so begrenzt deren Innenfläche den Strömungskanal auf der Außenseite. Bezeichnend für die hier vorgeschlagene Reibahle ist, dass deren Außenfläche zwischen den Austrittsöffnungen und der Stirnseite des Grundkörpers unversehrt ist. Die hier gegebene Ausgestaltung der Reibahle zeichnet sich dadurch aus, dass die Außenfläche also im Bereich des Strömungskanals keine Vertiefungen umfasst, wie sie zur Ausbildung herkömmlicher Spanräume in der Umfangsfläche von Reibahlen vorgesehen sind. Dadurch ergibt sich zwischen den Austrittsöffnungen und der Stirnseite des Grundkörpers ein definierter Strömungskanal für das Kühl-/Schmiermittel, der sich durch hohe Durchflussgeschwindigkeiten und einen großen Volumenstrom auszeichnet, sodass eine intensive Kühlung beziehungsweise Schmierung der Reibahle gegeben ist. Dadurch, dass Vertiefungen in der Außenfläche der Reibahle entfallen, ist deren Grundkörper sehr stabil, auch wenn die Anzahl der in die Außenfläche eingesetzten Messerplatten bezogen auf die Größe der Umfangsfläche beziehungsweise auf den Durchmesser der Reibahle sehr groß ist. Es zeigt sich hierbei, dass mit dem Begriff "unversehrt" sehr wohl vereinbar ist, wenn die Außenfläche der Reibahle Bearbeitungsspuren umfasst.

Besonders bevorzugt wird eine Reibahle, die sich dadurch auszeichnet, dass die der Kühl-/Schmiermittelversorgung dienenden Kanäle unter einem Winkel verlaufen und so angeordnet sind, dass ihre Mittelachse zumindest im Bereich der Außenfläche des Grundkörpers der Reibahle einen Winkel mit der Dreh- beziehungsweise Mittelachse der Reibahle selbst einen Winkel einschließen, derart, dass sie in Richtung auf die Stirnseite der Reibahle geneigt sind. Aus den Kanälen austretendes Kühl-/Schmiermittel tritt also schräg nach vorne in Richtung auf die Stirnseite aus, damit auch in Vorschubrichtung, wenn die Reibahle zur Bearbeitung einer Bohrung herangezogen wird. Dies führt dazu, dass die Späne besonders gut aus dem Strömungskanal nach vorne ausgetragen werden, insbesondere dann, wenn die Umfangsfläche der Reibahle unversehrt ist und sich damit keine Querschnittsvergrößerungen ergeben, was zu einer Reduzierung der Strömungsgeschwindigkeit des Kühl-/Schmiermittels führen würde und damit zu einer verminderten Effektivität beim Austragen von Spänen. Auch würde die Kühlung der Reibahle, insbesondere der aktiven Schneiden und des Werkzeugs nicht so effektiv sein. Weitere Ausgestaltungen ergeben sich aus den Unteransprüchen.

Die Erfindung wird im Folgenden anhand der Zeichnung näher erläutert. Es zeigen:
- Figur 1: eine perspektivische Vorderansicht einer Reibahle mit in deren Grundkörper eingesetzten Messerplatten;
- Figur 2: die Reibahle gemäß Figur 1 ohne Messerplatten und
- Figur 3: einen Querschnitt durch die Reibahle gemäß den Figuren 1 und 2 im Bereich von Austrittsöffnungen für ein Kühl-/Schmiermittel.

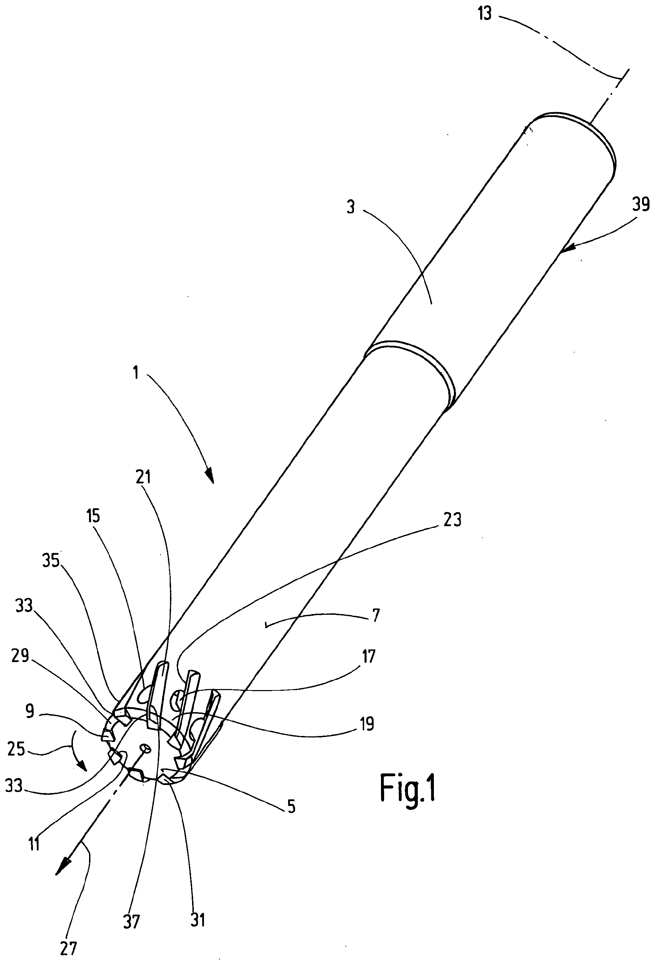

Figur 1 zeigt eine Reibahle 1 mit einem Grundkörper 3, der eine Stirnseite 5 aufweist sowie eine diese umgebende Außenfläche 7. Sie umfasst eine Anzahl von Messerplatten 9, die in die Außenfläche 7 der Reibahle 1 eingebrachte Nuten 11 eingesetzt sind. Die Tiefe der Nuten 11 und die radial zur Dreh- oder Mittelachse 13 der Reibahle 1 gemessene Breite der Messerplatten 9 sind so aufeinander abgestimmt, dass die außen liegenden Längskanten mit den aktiven Schneiden der Messerplatten 9 über die Umfangsfläche 7 hinausstehen. Die außen liegenden Längsseiten der Messerplatte 9 stehen - vorzugsweise unabhängig vom Durchmesser der Reibahle 1 - 0,2 mm bis 0,5 mm über die Außenfläche 7 des Grundkörpers 3 vor. Besonders bevorzugt wird ein Überstand von 0,3 mm bis 0,4 mm. Die Breite der Nuten 11 und die Dicke der Messerplatten 9 ist so gewählt, dass sich beim Einsetzen der Messerplatten 9 in den Grundkörper 3 der Reibahle 1 eine Presspassung ergibt. Die Messerplatten 9 können durch Kleben oder durch Löten im Grundkörper 3 fixiert werden, wobei der Klebstoff beziehungsweise das Lötmittel insbesondere am Grund der Nut 11 vorzusehen ist, sodass die Messerplatte 9 jeweils an ihrer innen liegenden Längsseite im Grundkörper 3 befestigt ist.

Zwischen zwei benachbarten Messerplatten sind in einem Abstand zur Stirnseite 5 Austrittsöffnungen 15 in der Außenfläche 7 erkennbar, in denen sich Kanäle 17 einer im Inneren des Grundkörpers 3 vorgesehenen Kühl-/Schmiermittelversorgung öffnen. Durch diese Austrittsöffnungen 15 kann also ein in den Grundkörper 3 der Reibahle 1 eingebrachtes Kühl-/Schmiermittel durch die Außenfläche 7 austreten.

Zwischen je zwei benachbarten Messerplatten 9 ergibt sich ein Strömungskanal 19 für das Kühl-/Schmiermittel. Der Strömungskanal 19 wird seitlich von den einander zugewandten Seitenflächen 21, 23 der benachbarten Messerplatten begrenzt, zusätzlich von der Außenfläche 7 des Grundkörpers 3. Die von geometrisch definierten Schneiden der Messerplatten abgetragenen Späne werden von dem durch den Strömungskanal 19 strömenden Kühl-/Schmiermittel nach vorne abgelenkt. Bei der Bearbeitung einer Bohrungsoberfläche dreht sich das hier dargestellte Ausführungsbeispiel der Reibahle 1, wie durch den Pfeil 25 angedeutet, gegen den Uhrzeigersinn und wird in axialer Richtung nach vorne geschoben, sodass sich die durch einen Pfeil 27 angedeutete Vorschubrichtung ergibt. Das heißt also, dass die Späne in Vorschubrichtung abgelenkt und abtransportiert werden. Bei der Reibahle 1 ist vorgesehen, dass zwischen je zwei benachbarten Messerplatten 9 eine Austrittsöffnung 15 vorgesehen ist. Jeder zwischen je zwei benachbarten Messerplatten 9 vorgesehene Strömungskanal 19 weist also eine eigene Austrittsöffnung 15 auf.

Aus der Darstellung gemäß Figur 1 ist erkennbar, dass die Stirnseite 5 eine Fase 29 aufweist, sodass die Stirnseite 5 also zwei Bereiche umfasst: Ein erster Bereich, der um die Mittelachse 13 angeordnet ist, liegt in einer Ebene, auf der die Mittelachse 13 senkrecht steht. Ein zweiter Bereich der Stirnseite 5 wird durch die Fase 29 gebildet, die ausgehend von dem ersten Bereich in Richtung auf die Außenfläche 7 abfällt, wodurch quasi ein Kegelstumpfmantel gebildet wird.

Figur 1 zeigt auch, dass die Außenfläche 7 des Grundkörpers 3, welche die Stirnseite 5 mit der Fase 29 umgibt, zwischen der Austrittsöffnung 15 und der Stirnseite 5 beziehungsweise der Fase 29 unversehrt ist. Dieser Bereich der Außenfläche 7, der den Strömungskanal 19 begrenzt, weist also keine Vertiefungen auf, wie sie bei herkömmlichen Reibahlen 1 vorgesehen sind, um einen Spanraum zu bilden. Damit ergibt sich Folgendes:
Bei der Bearbeitung einer Bohrung mittels der Reibahle 1 wird ein Strömungskanal 19 durch die Seitenflächen 21 und 23 benachbarter Messerplatten 9 begrenzt, außerdem durch die Innenwand der bearbeiteten Bohrung. Die innere, der Mittelachse 13 zugewandten Begrenzungsfläche des Strömungskanals 19 wird also durch den unversehrten Bereich der Außenfläche 7 gebildet, der zwischen der Austrittsöffnung 15 und der Stirnseite 5 liegt. Dadurch, dass zwischen der Austrittsöffnung 15 und der Stirnseite 5 keine Vertiefungen herkömmlicher Art vorgesehen sind, ergibt sich ein Strömungsquerschnitt für das aus der zugehörigen Austrittsöffnung 15 austretende Kühl-/Schmiermedium. Eine gegebene, vorzugsweise hohe Durchflussgeschwindigkeit und ein großer Volumenstrom bleiben also bei gleichbleibendem Strömungsquerschnitt bis zur Stirnseite 5 der Reibahle 1 erhalten, was zu einer optimalen Kühlung beziehungsweise Schmierung der Reibahle 1 führt, dabei werden die abgetragenen Späne sehr effektiv abgelenkt. Vorzugsweise ist vorgesehen, dass der Strömungsquerschnitt des Strömungskanals 19 in Richtung auf die Stirnseite 5 - insbesondere kontinuierlich - abnimmt. Dadurch nimmt die Durchflussgeschwindigkeit, also die Strömungsgeschwindigkeit, des Kühl-/Schmiermittels im Bereich des Strömungskanals 19 zu.

Dabei wird sichergestellt, dass der Grundkörper 3 der Reibahle 1 nicht durch irgendwelche Vertiefungen in der Außenfläche 7 geschwächt wird. Dadurch können, insbesondere auch bei sehr kleinen Durchmessern der Reibahle 1, sehr viele Messerplatten 9 nebeneinander in den Grundkörper 3 eingesetzt werden.

Die Aussage, dass die Außenfläche 7 im Bereich zwischen der Austrittsöffnung 15 und der Stirnseite 5 unversehrt ist, soll nicht besagen, dass in diesem Bereich der Außenfläche 7 keinerlei Bearbeitungsspuren oder dergleichen vorhanden sein dürfen, die durch die Herstellung der Reibahle 1 erzeugt werden können, beispielsweise beim Drehen oder Schleifen des Grundkörpers 3.

Figur 1 zeigt, dass die Austrittsöffnung 15 nicht in der Mitte zwischen zwei benachbarten Messerplatten 9 liegt, sondern unmittelbar an eine der beiden Messerplatten angrenzt. Es handelt sich hierbei um die - in Richtung der durch den Pfeil 25 angedeuteten Drehrichtung gesehen - nacheilende Messerplatte, welche die Austrittsöffnung 15 begrenzt. Schon dadurch wird diese Messerplatte 9 besonders gut gekühlt.

Wie aus Figur 1 ersichtlich, können die Messerplatten 9 so ausgerichtet sein, dass sie nicht parallel zur Mittelachse 13 verlaufen, sondern, bei Projektion in eine gemeinsame Ebene, mit dieser einen Winkel einschließen. Dabei sind hier die Messerplatten 9, in der durch den Pfeil 27 angedeuteten Vorschubrichtung gesehen, nach links geneigt, sodass in einen Strömungskanal 19 gelangende Späne bei der Bearbeitung einer Bohrungswand nach vorne in Richtung zur Stirnseite 5, also in Vorschubrichtung gedrängt werden. Diese Anordnung der Messerplatten 9 begünstigt also die Entfernung von Spänen von den aktiven Schneiden.

Die Messerplatten 9 sind vorzugsweise alle gleich ausgebildet. Ihre Stirnflächen 31 stehen, in Richtung der Mittelachse 13 gesehen, über die Stirnfläche 5 der Reibahle 1 vor, und zwar auch über den inneren Bereich der Stirnfläche 5, auf dem die Mittelachse 13 senkrecht steht und den die Fase 29 umgibt.

Alle Messerplatten 9 weisen, wie üblich, eine in Richtung der durch den Pfeil 27 angedeuteten Vorschubrichtung gesehen, Hauptschneide 33 auf, sowie eine sich daran anschließende Nebenschneide 35, die entgegen der Vorschubrichtung abfällt, allerdings deutlich weniger, als die Hauptschneide 33. In der durch den Pfeil 25 angedeuteten Drehrichtung gesehen, eilt der Hauptschneide 33 und der Nebenschneide 35 eine Freifläche 37 nach, die - von den Schneiden aus gesehen - entgegen der Drehrichtung abfällt. Vorzugsweise ist die Freifläche hier jedoch als Rundschlifffase ausgebildet, an der sich die zugehörige Messerplatte 9 an der Innenfläche einer bearbeiteten Bohrung abstützt. Dadurch ergibt sich eine sehr gute Führung der Reibahle 1 in der zu bearbeitenden Bohrung, ohne dass Führungsleisten oder dergleichen vorgesehen werden müssten. Betrachtet man eine Messerplatte 9 ausgehend von der Stirnseite 5, so ergibt sich also ein erster, in Vorschubrichtung abfallender Bereich, der die Hauptschneide 33 bildet. Daran schließt sich die in Gegenrichtung abfallende Nebenschneide 35 an. Im Bereich der Nebenschneide 35 werden noch Späne von der Bohrungswand abgetragen. In einem daran angrenzenden Bereich ergibt sich ein Stützbereich, in dem sich die Reibahle 1 an der Bohrungswand beziehungsweise deren Innenfläche abstützt.

Der Abstand der Austrittsöffnungen 15 von der Stirnseite 5 wird so gewählt, dass das aus den Austrittsöffnungen 15 austretende Kühl-/Schmiermittel sowohl die Hauptschneide 33 als auch die Nebenschneide 35 trifft, vorzugsweise aber auch den Bereich der Messerplatten, in dem sich diese mit ihrer Freifläche 37 noch an der Innenfläche der Bohrung abstützt. Damit wird sichergestellt, dass alle Bereiche der Messerplatten 9, die bei der Bearbeitung einer Bohrungswand durch Schnittkräfte aber auch durch Abstützkräfte belastet werden, gekühlt und geschmiert werden.

Die Messerplatten 9 weisen eine Haupt- 33 und eine Nebenschneide 35 auf. Die Austrittsöffnungen 15 der Kanäle 17 sind bevorzugt in einem Abstand zur Stirnseite 5 des Grundkörpers 3 angeordnet, der mindestens der - in axialer Richtung gemessenen - Länge der Nebenschneiden 35 entspricht.

Besonders bevorzugt wird auch eine Ausgestaltung der Reibahle, bei welcher der Abstand der Austrittsöffnungen 15 zur Stirnseite 5 größer oder gleich ist wie die - in axialer Richtung gemessene - Länge der Nebenschneiden 35 plus eines sich an die Nebenschneiden anschließenden Stützbereichs der Messerplatte 9.

Dabei ist es nicht zwingend erforderlich, dass alle Austrittsöffnungen 15 in einem gleichen Abstand zur Stirnseite 5 in der Außenfläche 7 des Grundkörpers 3 einer Reibahle münden. Um eine zu große Schwächung des Grundkörpers 3 zu vermeiden, können die Austrittsöffnungen 15 auf zwei gedachten Kreisen der Außenfläche 7 angeordnet werden, die unterschiedliche Abstände zur Stirnseite 5 aufweisen. Dabei wird, wie gesagt, vorzugsweise sichergestellt, dass der Abstand aller Austrittsöffnungen 15 zur Stirnseite 5 so gewählt ist, dass auch die Bereiche der Freifläche 37 einer Messerplatte 9 gekühlt und geschmiert werden, die der Abstützung der Reibahle 1 an der Innenfläche einer Bohrung dienen.

Der in einem Abstand zur Stirnseite 5 liegende hintere Bereich 39 der Reibahle 1 dient der Befestigung der Reibahle 1 an einer Werkzeugmaschine, einem Adapter, einem Zwischenstück oder dergleichen. Die Außenkontur dieses Bereichs 39 ist auf die jeweilige Befestigungsart abgestimmt. Hier ist er beispielhaft zylindrisch ausgebildet.

Figur 1 ist noch zu entnehmen, dass die Messerplatten 9 - in Vorschubrichtung gesehen - über die Stirnseite 5 etwas vorspringen, dadurch wird der den Strömungskanal 19 Kühl-/Schmiermittelfluss möglichst weit in Vorschubrichtung seitlich geführt. Dies führt zu einer sehr guten Kühlung und Schmierung der vordersten Bereiche der Messerplatten 9.

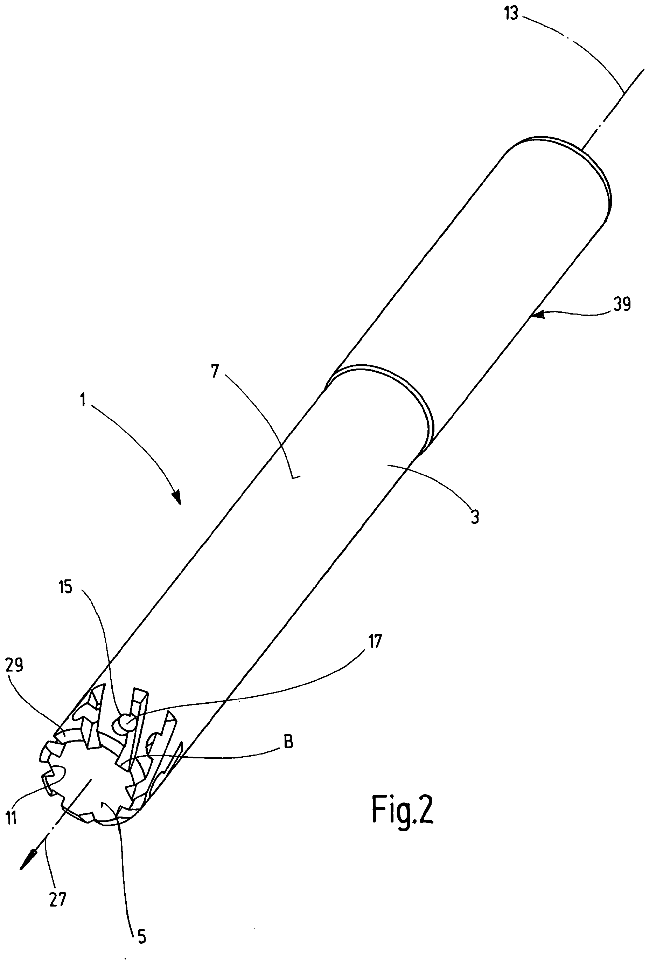

Figur 2 zeigt, etwas vergrößert, die Reibahle 1 ohne Messerplatten 9. Gleiche Teile sind mit gleichen Bezugsziffern versehen, sodass insofern auf die Beschreibung zu Figur 1 verwiesen wird.

Dadurch, dass die Messerplatten hier weggelassen sind, sind die Nuten 11 deutlich erkennbar. Es zeigt sich auch, dass diese so angeordnet sind, dass sie jeweils einen Kanal 17 der internen Kühl-/Schmiermittelversorgung schneiden. Das heißt, der Querschnitt eines Kanals 17 wird im Bereich einer Austrittsöffnung 15 dadurch reduziert, dass in die Nut 11 eine Messerplatte 9 eingesetzt wird. Mit anderen Worten: der Querschnitt einer Austrittsöffnung 15 ist bei eingesetzter Messerplatte 9 kleiner als der Querschnitt des Kanals 17, über den das Kühl-/Schmiermittel herangeführt wird, das dann über die Umfangsfläche 7 aus der Austrittsöffnung 15 in den Strömungskanal 19 austritt. Dies führt zu einer Erhöhung der Fließgeschwindigkeit des Kühl-/Schmiermittels im Strömungskanal 19. Diese erhöhte Fließgeschwindigkeit wird bis zur Stirnseite 5 beziehungsweise der zugehörigen Fase 29 aufrechterhalten. Das mit der erhöhten Fließgeschwindigkeit durch den Strömungskanal 19 strömende Kühl-/Schmiermittel kühlt und schmiert die Reibahle 1 sehr effektiv und trägt von den aktiven Schneiden der Messerplatte 9 abgetragene Späne besonders gut aus. Dadurch, dass der Bereich zwischen Austrittsöffnung 15 und Stirnseite 5 der Außenfläche 7 der Reibahle 1 unversehrt ist, bleibt die erhöhte Fließgeschwindigkeit bis zur Stirnseite 5 erhalten.

Wie oben gesagt, kann sich mindestens einer der Strömungskanäle 19 in Richtung auf die Stirnseite 5 verjüngen, sodass die Strömungsgeschwindigkeit des Kühl-/Schmiermittels zunehmend erhöht wird, um den Wärmeabtransport zu steigern und um die Ablenkung der Späne an den aktiven Schneiden der Messerplatte 9 zu verbessern.

Es ergibt sich noch ein weiterer Effekt: Dadurch dass die Nut 11 den Kanal 17 schneidet, strömt das Kühl-/Schmiermittel unmittelbar an einer in die zugehörige Nut 11 eingesetzten Messerplatte 9 entlang und zwar vom Boden B der Nut 11 bis zur Außenfläche 7 der Reibahle 1, sodass die Messerplatte 9 besonders effektiv gekühlt wird. Bei der Bearbeitung einer Bohrung in die Messerplatte 9 eingeleitete Wärme wird also optimal abgeleitet.

Eine besonders hohe Strömungsgeschwindigkeit des Kühl-/Schmiermittels ergibt sich dann, wenn, wie bevorzugt, der Querschnitt des Strömungskanals 19 im Bereich zwischen Austrittsöffnung 15 und Stirnseite 9 beziehungsweise Fase 29 kleiner ist als die Fläche der Austrittsöffnung 15 in der Außenfläche 7.

Um das Kühl-/Schmiermittel besonders effektiv zur Stirnseite 5 zu leiten, sind die Kanäle 17 vorzugsweise geneigt ausgebildet, wobei deren Mittelachsen zumindest im Bereich der Austrittsöffnung 15 in Richtung zur Stirnseite 5 geneigt sind, sodass das Kühl-/Schmiermittel aus den Austrittsöffnungen 15 quasi in Vorschubrichtung aus der Außenfläche 7 austritt.

Um eine Rückströmung des Kühl-/Schmiermittels zu verhindern, kann der Querschnitt des Strömungskanals 19, entgegen der Vorschubrichtung gesehen, hinter den Austrittsöffnungen 15 reduziert sein, also in einem Bereich, der in einem größeren Abstand zur Stirnfläche 5 als die Austrittsöffnung 15 liegt. Dies kann durch eine Rampe oder eine Stufe auf der Außenfläche 7 der Reibahle 1 erreicht werden. Es ist also in diesem Fall vorgesehen, dass bei der Bearbeitung der Außenfläche 7 der Reibahle 1 der Bereich zwischen Stirnseite 5 und Austrittsöffnung 15 der Außenfläche 7 einen ersten Außendurchmesser aufweist, und dass der Bereich hinter den Austrittsöffnungen 15 einen zweiten Außendurchmesser aufweist, der größer ist als der Außendurchmesser im ersten Bereich nahe der Stirnseite 5. Es ergibt sich damit ein erhöhter Strömungswiderstand für das Kühl-/Schmiermittel, sodass dieses bevorzugt in Richtung der Stirnseite 5 beziehungsweise in Vorschubrichtung strömt.

Figur 2 zeigt noch, dass die Länge der Nuten 11 wesentlich größer ist als deren Breite. Die in die Nuten 11 eingebrachten Messerplatten 9 werden also über einen weiten Bereich im Grundkörper 3 der Reibahle 1 gehalten, sodass auf die Messerplatten 9 wirkende Kräfte optimal in den Grundkörper eingeleitet werden.

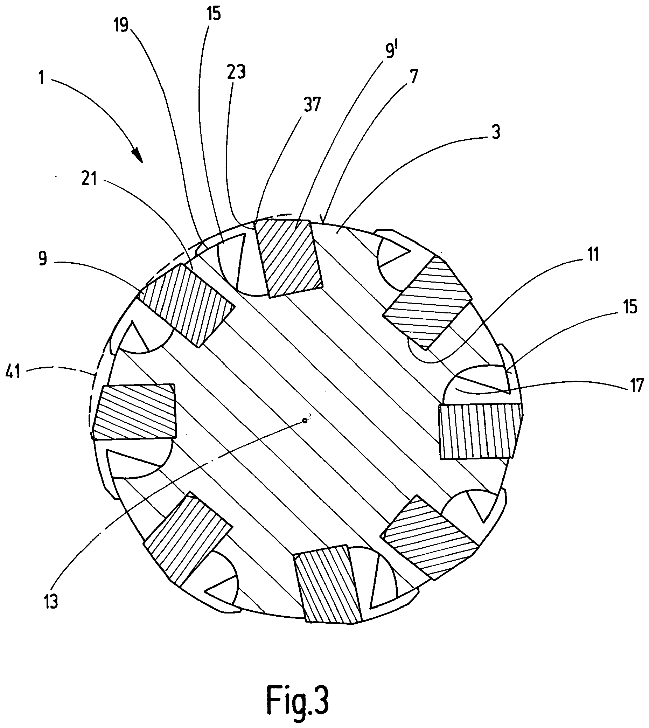

Figur 3 zeigt die Reibahle 1 im Querschnitt, wobei die Schnittebene senkrecht zur Mittelachse 13 verläuft und im Bereich der Austrittsöffnungen 15 vorgesehen ist.

Deutlich erkennbar ist, dass hier acht Messerplatten vorgesehen sind, die paarweise einander gegenüberliegen, die aber nicht im gleichen Umfangsabstand zueinander angeordnet sind. Diese Anordnung dient dazu, Vibrationen und ein Rattern der Reibahle 1 bei der Bearbeitung von Bohrungen zu minimieren.

Erkennbar sind hier die Kanäle 17, die von den Nuten geschnitten werden, sodass Austrittsöffnungen 15 gebildet werden, deren Fläche in der Außenfläche 7 vorzugsweise kleiner ist als die Querschnittsfläche der zugehörigen Kanäle 17. Aus der Schnittdarstellung ist auch erkennbar, dass die Kanäle 17 unter einem Winkel zur Mittelachse 13 geneigt sind. Durch die unterschiedliche Größe der geschnittenen Kanäle 17 ist auch zu erkennen, dass diese nicht alle in einer Ebene beziehungsweise auf einer gemeinsamen Umfangslinie liegen, damit der Grundkörper 3 der Reibahle 1 nicht zu sehr geschwächt wird.

Deutlich erkennbar ist hier, dass zwischen je zwei benachbarten Messerplatten ein Strömungskanal 19 gebildet wird. Beispielsweise liegt zwischen den Messerplatten 9 und 9' der Strömungskanal 19, der von den einander zugewandten Seitenflächen 21 und 23 der Messerplatten 9 und 9' seitlich begrenzt wird. Auf seiner der Mittelachse 13 zugewandten Seite ist der Strömungskanal 19 durch einen Bereich der Außenfläche 7 begrenzt, der zwischen der hier nicht sichtbaren Stirnseite 5 und der zugehörigen Austrittsöffnung 15 liegt.

Die in radialer Richtung gemessene Dimension des Strömungskanals 19 ergibt sich durch den Abstand der zugehörigen Außenfläche 7 zu der hier gestrichelt angedeuteten Innenfläche 41 einer bearbeiteten Bohrung. Vorzugsweise ist vorgesehen, dass der Querschnitt des Strömungskanals 19 kleiner ist als die Fläche der zugehörigen Austrittsöffnung 15. Dadurch ergibt sich eine sehr hohe Strömungsgeschwindigkeit des über den Kanal 17 der Öffnung 15 zugeführten Kühl-/Schmiermittels.

Auch aus Figur 2 ist erkennbar, dass die Messerplatten 9 unter einem Winkel zur Mittelachse 13 angeordnet sind. Grundsätzlich ist es aber auch möglich, die Nuten 11 und die Messerplatten 9 parallel zur Mittelachse 13 auszurichten. Bei dem hier dargestellten Ausführungsbeispiel der Reibahle 1 wird durch die schräge Anordnung der Messerplatten 9 auf die von den aktiven Schneiden abgetragenen Späne eine Kraft ausgeübt, welche diese in Richtung zur Stirnseite 5 drängt.

Vorzugsweise wird die Reibahle 1 mit einem Kühl-/Schmiermittel beaufschlagt, welches unter einem Druck von 20 bar bis insbesondere 40 bar steht. Durch die gegenüber den Kanälen 17 reduzierte Größe der Austrittsöffnungen 15 ergibt sich damit eine sehr hohe Fließgeschwindigkeit des Kühl-/Schmiermittels in den Strömungskanälen 19. Es zeigt sich auch, dass der in der Kühl-/Schmiermittelversorgung vorhandene Druck optimal bis zu den Strömungskanälen 19 aufrechterhalten wird, was den Abtransport der bei der Bearbeitung einer Bohrung entstehenden Späne sicherstellt. Dies bewirkt auch, dass die Fließgeschwindigkeit des Kühl-/Schmiermittelmediums vierbis achtmal höher ist als bei herkömmlichen Reibahlen.

Der hier beschriebene Aufbau der Reibahle 1, insbesondere des Strömungskanals 19 bewirkt, dass sich sehr hohe Durchflussgeschwindigkeiten des Kühl-/Schmiermittels ergeben, auch wenn ein gegenüber bekannten, mit Spanräumen versehenen Reibahlen deutlich reduzierter Volumenstrom im inneren Kühl-/Schmiermittelsystem zur Verfügung gestellt wird. Versuche haben gezeigt, dass 1/6 bis 1/4 des bei herkömmlichen Reibahlen erforderlichen Volumenstroms hier ausreicht, um die hohen Durchflussgeschwindigkeiten sicherzustellen. Reibahlen 1 der hier erläuterten Art können daher mit Kühl-/Schmiermittelpumpen verwendet werden, deren Leistung gegenüber anderen wesentlich reduziert ist.

## Patentansprüche

1. Reibahle (1) mit
- einem Grundkörper (3),
*der eine Stirnseite (5) aufweist,
* in dessen Außenfläche (7) Nuten (11) eingebracht sind, und
* der eine innere Kühl-/Schmiermittelversorgung mit Kanälen (17) aufweist, welche die Außenfläche (7) des Grundkörpers (3) schneiden und damit Austrittsöffnungen (15) bilden, sowie mit
- in die Nuten (11) einsetzbaren Messerplatten (9), wobei
- die Austrittsöffnungen (15) in einem Abstand zur Stirnseite (5) des Grundkörpers (3) angeordnet sind,
- wobei zwischen je zwei benachbarten Messerplatten (9,9') ein Strömungskanal (19) ausgebildet wird, der von den einander zugewandten Seitenflächen (21,23) der Messerplatten (9,9') und der Außenfläche (7) des Grundkörpers (3) begrenzt wird, **dadurch gekennzeichnet, dass** die Außenfläche (7) zwischen den Austrittsöffnungen (15) und der Stirnseite (5) des Grundkörpers (3) frei von Vertiefungen ist.

2. Reibahle nach Anspruch 1, **dadurch gekennzeichnet, dass** die Kanäle (17) der Kühl-/Schmiermittelversorgung unter einem Winkel verlaufen und so angeordnet sind, dass ihre Mittelachse zumindest im Bereich der Außenfläche (7) des Grundkörpers (3) der Reibahle (1) zu deren Stirnseite (5) geneigt ist.

3. Reibahle nach Anspruch 1 oder 2, **dadurch gekennzeichnet, dass** die Fläche der Austrittsöffnungen (15) größer ist als die Querschnittsfläche der zugehörigen Strömungskanäle (19).

4. Reibahle nach einem der vorhergehenden Ansprüche, **dadurch gekennzeichnet, dass** die der Aufnahme der Messerplatten (9) dienenden Nuten (11) die Kanäle (17) schneiden, sodass die in die Nuten (11) eingesetzten Messerplatten (9) die Kanäle (17) zum Teil verdecken.

5. Reibahle nach einem der vorhergehenden Ansprüche, **dadurch gekennzeichnet, dass** zumindest einige, vorzugsweise alle Messerplatten (9) die Stirnseite (3) des Grundkörpers (3) in axialer Richtung überragen.

6. Reibahle nach einem der vorhergehenden Ansprüche, **dadurch gekennzeichnet, dass** die Stirnseite (5) des Grundkörpers (3) eine umlaufende Fase (29) aufweist.

7. Reibahle nach einem der vorhergehenden Ansprüche, **dadurch gekennzeichnet, dass** die Messerplatten (9) eine Haupt-(33) und eine Nebenschneide (35) aufweisen, und dass die Austrittsöffnungen (15) in einem Abstand zur Stirnseite (5) des Grundkörpers (3) angeordnet sind, der mindestens der - in axialer Richtung gemessenen - Länge der Nebenschneiden (35) entspricht.

8. Reibahle nach Anspruch 7, **dadurch gekennzeichnet, dass** der Abstand der Austrittsöffnungen (15) zur Stirnseite (5) größer oder gleich ist wie die - in axialer Richtung gemessene - Länge der Nebenschneiden (35) plus eines sich an die Nebenschneiden anschließenden Stützbereich der Messerplatte (9).

9. Reibahle nach Anspruch 1, **dadurch gekennzeichnet, dass** die Messerplatten (9) parallel zur Mittelachse (13) der Reibahle (1) angeordnet sind.

10. Reibahle nach Anspruch 1, **dadurch gekennzeichnet, dass** die Messerplatten (9) unter einem Winkel zur Mittelachse (13) der Reibahle (1) angeordnet sind.

11. Reibahle nach Anspruch 10, **dadurch gekennzeichnet, dass** die Messerplatten (9) so gegenüber der Mittelachse (13) geneigt sind, dass bei Verwendung der Reibahle (1) Späne aus den Strömungskanälen (19) in Richtung auf die Stirnseite (5) gedrängt werden.

12. Reibahle nach einem der vorhergehenden Ansprüche, **dadurch gekennzeichnet, dass** die Messerplatte (9) 0,2 mm bis 0,5 mm, vorzugsweise 0,3 mm bis 0,4 mm über die Außenfläche (7) des Grundkörpers (3) vorstehen.

13. Reibahle nach einem der vorhergehenden Ansprüche, **dadurch gekennzeichnet, dass** sich der Querschnitt mindestens eines Strömungskanals (19) in Richtung auf die Stirnseite (15) verjüngt.

14. Reibahle nach einem der vorhergehenden Ansprüche, **dadurch gekennzeichnet, dass** zwischen den die Messerplatten (9) aufnehmenden Nuten (11) und den Messerplatten (9) eine Passung gegeben ist.

15. Reibahle nach einem der vorhergehenden Ansprüche, **dadurch gekennzeichnet, dass** die Messerplatten (9) am Grundkörper (3) festgeklebt oder festgelötet sind.

16. Reibahle nach Anspruch 15, **dadurch gekennzeichnet, dass** die Messerplatten (9) im Wesentlichen nur mit ihren in Längsrichtung verlaufenden Schmalseiten am Boden (B) der zugehörigen Nut (11) befestigt sind.

17. Reibahle nach einem der vorhergehenden Ansprüche, **dadurch gekennzeichnet, dass** der - senkrecht zur Mittelachse (13) der Reibahle (1) gemessene - Querschnitt eines Strömungskanals (19) gleich oder größer ist als die Fläche der zugehörigen Austrittsfläche (15) eines der Zufuhr von Kühl-/Schmiermittel dienenden Kanals (17).

## Claims

1. A reamer (1) comprising
- a base body (3),
* which has a front side (5),
* in the outer surface (7) of which grooves (11) are introduced, and
* which has an internal coolant/lubricant supply comprising channels (17), which intersect the outer surface (7) of the base body (3) and form exit openings (15) therewith, as well as comprising
- cutter plates (9), which can be inserted into the grooves (11), wherein
- the exit openings (15) are arranged at a distance to the front side (5) of the base body (3),
wherein a flow channel (19), which is defined by the side surfaces (21, 23) of the cutter plates (9, 9'), which face one another, and the outer surface (7) of the base body (3), is formed between two respective adjacent cutter plates (9, 9'), **characterized in that** the outer surface (7) between the exit openings (15) and the front side (5) of the base body (3) is free from depressions.

2. The reamer according to claim 1, **characterized in that** the channels (17) of the coolant/lubricant supply run at an angle and are arranged so that at least in the region of the outer surface (7) of the base body (3) of the reamer (1), the central axis thereof is inclined towards the front side (5) of said reamer.

3. The reamer according to claim 1 or 2, **characterized in that** the surface of the exit openings (15) is greater than the cross-sectional surface of the corresponding flow channels (19).

4. The reamer according to any one of the preceding claims, **characterized in that** the grooves (11), which serve to accommodate the cutter plates (9), intersect the channels (17), so that the cutter plates (9), which are inserted into the grooves (11), partially cover the channels (17).

5. The reamer according to any one of the preceding claims, **characterized in that** at least some, preferably all cutter plates (9) protrude beyond the front side (3) of the base body (3) in the axial direction.

6. The reamer according to any one of the preceding claims, **characterized in that** the front side (5) of the base body (3) has a circumferential chamfer (29).

7. The reamer according to any one of the preceding claims, **characterized in that** the cutter plates (9) have a primary (33) and a secondary cutting blade (35), and that the exit openings (15) are arranged at a distance to the front side (5) of the base body (3), which corresponds at least to the length of the secondary cutting blades (35) - measured in the axial direction.

8. The reamer according to claim 7, **characterized in that** the distance of the exit openings (15) to the front side (5) is greater than or identical to the length of the secondary cutting edges (35) - measured in the axial direction - plus a support region of the cutter plate (9) adjoining the secondary cutting edges.

9. The reamer according to claim 1, **characterized in that** the cutter plates (9) are arranged parallel to the central axis (13) of the reamer (1).

10. The reamer according to claim 1, **characterized in that** the cutter plates (9) are arranged at an angle to the central axis (13) of the reamer (1).

11. The reamer according to claim 10, **characterized in that** the cutter plates (9) are inclined with respect to the central axis (13) in such a way that, when using the reamer (1), chips are pushed out of the flow channels (19) towards the front side (5).

12. The reamer according to any one of the preceding claims, **characterized in that** the cutter plates (9) protrude between 0.2 mm and 0.5 mm, preferably between 0.3 mm and 0.4 mm beyond the outer surface (7) of the base body (3).

13. The reamer according to any one of the preceding claims, **characterized in that** the cross section of at least one flow channel (19) tapers in the direction of the front side (15).

14. The reamer according to any one of the preceding claims, **characterized in that** there is a fit between the grooves (11) accommodating the cutter plates (9) and the cutter plates (9).

15. The reamer according to any one of the preceding claims, **characterized in that** the cutter plates (9) are fixedly adhered or fixedly soldered to the base body (3).

16. The reamer according to claim 15, **characterized in that** the cutter plates (9) are fastened to the base (B) of the corresponding groove (11) essentially only with their narrow sides, which run in the longitudinal direction.

17. The reamer according to any one of the preceding claims, **characterized in that** the cross section of a flow channel (19) - measured perpendicular to the central axis (13) of the reamer (1) - is equal to or greater than the surface of the corresponding exit surface (15) of a channel (17), which serves to supply coolant/lubricant.

## Revendications

1. Alésoir (1) avec
- un corps de base (3)
* qui présente une face frontale (5),
* qui comporte des rainures (11) sur sa face extérieure (7) et
* qui présente une alimentation interne en liquide de refroidissement/lubrifiant avec des canaux (17) qui découpent la face extérieure (7) du corps de base (3) et forment ainsi des orifices de sortie (15), ainsi qu'avec
- des plaques de lames (9) insérables dans les rainures (11),
- les orifices de sortie (15) étant disposés à une certaine distance de la face frontale (5) du corps de base (3),
un canal d'écoulement (19) limité par les faces latérales (21,23) tournées l'une vers l'autre des plaques de lames (9,9') et par la face extérieure (7) du corps de base (3), se formant entre deux plaques de lames (9,9') adjacentes, **caractérisé en ce que** la face extérieure (7) entre les orifices de sortie (15) et la face frontale (5) du corps de base (3) est exempte de creux.

2. Alésoir conformément à la revendication n°1, **caractérisé en ce que** les canaux (17) de l'alimentation en liquide de refroidissement/lubrifiant suivent un angle et sont disposés de façon à ce que leur axe médian soit incliné vers la face frontale (5), du moins dans la zone de la face extérieure (7) du corps de base (3) de l'alésoir (1).

3. Alésoir conformément à la revendication n°1 ou n°2, **caractérisé en ce que** la face des orifices de sortie (15) est plus grande que la face transversale des canaux d'écoulement (19) correspondants.

4. Alésoir conformément à l'une des revendications précédentes, **caractérisé en ce que** les rainures (11) servant au logement des plaques de lames (9) découpent les canaux (17) de sorte que les plaques de lames (9) insérées dans les rainures (11) masquent partiellement les canaux (17).

5. Alésoir conformément à l'une des revendications précédentes, **caractérisé en ce que** au moins quelques, de préférence toutes les plaques de lames (9) dépassent dans le sens axial sur la face frontale (3) du corps de base (3).

6. Alésoir conformément à l'une des revendications précédentes, **caractérisé en ce que** la face frontale (5) du corps de base (3) présente un chanfrein circulaire (29).

7. Alésoir conformément à l'une des revendications précédentes, **caractérisé en ce que** les plaques de lames (9) présentent une lame principale (33) et une lame auxiliaire (35) et que les orifices de sortie (15) sont disposés à une certaine distance par rapport à la face frontale (5) du corps de base (3), qui correspond au moins à la longueur des lames auxiliaires (35), mesurée dans le sens axial.

8. Alésoir conformément à la revendication n°7, **caractérisé en ce que** la distance des orifices de sortie (15) par rapport à la face frontale (5) est plus grande ou égale à la longueur des lames auxiliaires (35), mesurée dans le sens axial, plus une zone de support de la plaque de lame (9) suivant les lames auxiliaires.

9. Alésoir conformément à la revendication n°1, **caractérisé en ce que** les plaques de lames (9) sont disposées parallèlement à l'axe médian (13) de l'alésoir (1).

10. Alésoir conformément à la revendication n°1, **caractérisé en ce que** les plaques de lames (9) sont disposées en formant un angle par rapport à l'axe médian (13) de l'alésoir (1).

11. Alésoir conformément à la revendication n° 10, **caractérisé en ce que** les plaques de lames (9) sont inclinées par rapport à l'axe médian (13) de façon à ce que, en utilisant l'alésoir (1), les copeaux provenant des canaux d'écoulement (19) soient refoulés en direction de la face frontale (5).

12. Alésoir conformément à l'une des revendications précédentes, **caractérisé en ce que** les plaques de lames (9) dépassent de 0,2 mm à 0,5 mm, de préférence de 0,3 mm à 0,4 mm, au-dessus de la face extérieure (7) du corps de base (3).

13. Alésoir conformément à l'une des revendications précédentes, **caractérisé en ce que** la section au moins d'un canal d'écoulement (19) se rétrécit en direction de la face frontale (15).

14. Alésoir conformément à l'une des revendications précédentes, **caractérisé en ce qu'**un ajustement est assuré entre les rainures (11) logeant les plaques de lames (9) et les plaques de lames (9).

15. Alésoir conformément à l'une des revendications précédentes, **caractérisé en ce que** les plaques de lames (9) sont collées ou soudées sur le corps de base (3).

16. Alésoir conformément à la revendication n°15, **caractérisé en ce que** les plaques de lames (9) sont essentiellement fixées seulement avec leur côté étroit dans le sens longitudinal au fond (B) de la rainure (11) correspondante.

17. Alésoir conformément à l'une des revendications précédentes, **caractérisé en ce que** la section d'un canal d'écoulement (19), mesurée perpendiculairement à l'axe médian (13) de l'alésoir (1) est égale à ou plus grande que la surface de la face de sortie (15) correspondante d'un canal (17) servant à l'alimentation en liquide de refroidissement/lubrifiant.
